# EUROPEAN PATENT APPLICATION

(11) **EP 4 582 273 A1**
(43) Date of publication of application: **09.07.2025**
(21) Application number: 24150803.5
(22) Date of filing: 08.01.2024
(51) Int. Cl.: B60H 1/32, B60H 1/00

(54) **A HEAT PUMP MODULE**

(71) Applicant: VALEO SYSTEMES THERMIQUES, 78320 Le Mesnil Saint-Denis (FR)
(72) Inventor: SESHA-SAI, Lohith-Sriram-Pavan, 600130 Chennai (IN); FIENE, Andreas, 96476 Bad Rodach (DE); GUIGOU, Pascal, 78322 Le Mesnil-Saint-Denis Cedex (FR)
(74) Representative: Valeo Systèmes Thermiques

(57) **Abstract**

A heat pump module (100) for a vehicle is disclosed in accordance with an embodiment of the present invention. The heat pump module (100) is adapted to be in fluidic communication with the heat exchangers of a heating ventilating and air conditioning system. The heat pump module (100) is having a refrigerant circuit arranged in a combination of blocks (30), connectors (40) and jumper pipes (50) in order to distribute the refrigerant to different components (20) of the heat pump module (100). Further, the heat pump module (100) comprises a plate assembly (60) in which a portion of the refrigerant circuit is arranged. The plate assembly (60) containing at least one channel (62). The heat pump module (100) being configured so that the jumper pipes (50) are associated to higher pressure portions of the refrigerant circuit than the plate assembly (60).

## Description

### TECHNICAL FIELD

The present invention relates to a thermal management module, more particularly, the present invention relates to a thermal management module for controlling fluid flow through heat exchangers of a vehicle heating ventilating and air conditioning system.

A thermal management module, for example, a heat pump module is adapted to be in fluidic communication with heat exchangers of a heating ventilating and air conditioning system of a vehicle. Generally, the heat pump module is having a refrigerant circuit. With the shift from internal combustion engine driven vehicles to electric vehicles, the heat pump module has become complex and bulky. More specifically, the heat pump modules for the electric vehicles involve battery-cooling circuit along with the refrigerant circuit, thereby increasing the complexity and size of the heat pump module. Further, with concern for sustainable development and environmental protection, natural refrigerant, particularly, R-744 based air conditioning systems are preferred over fluorinated refrigerant such as R-134a or R-1234yf based air conditioning systems. Also, anticipating the ban on fluorinated refrigerants, the R-744 based air conditioning systems are preferred over R-134a or R-1234yf based air conditioning systems.

The R-744 based air conditioning systems offers more power and efficiency at extreme cold temperatures (-18°C) due to enhanced thermodynamic properties of the R-744 refrigerant. The heat pump module integrates both the coolant loop and the refrigerant loop. The heat pump module configures refrigerant flow through the valves and heat exchangers. However, the heat pump module for the R-744 based air conditioning systems face several challenges. More specifically, the R-744 is a high-pressure refrigerant. Accordingly, the heat pump module for the R-744 based air conditioning systems is required to be robust to with strand the high pressures. Generally, the conventional heat pump involves conduits for configuring fluid communication between valves and heat exchangers to define fluid flow circuits. The conduits follow erratic profiles and cause pressure drop and losses. Also, some portions of the coolant loop and the refrigerant loop of the heat pump module involve flow of high pressure refrigerants, whereas other portions of the coolant loop and the refrigerant loop of the heat pump module involve flow of low pressure fluid. The portions of the heat pump module configuring fluid flow passages for low-pressure fluid need not be as robust as the portions configuring fluid flow passage for high-pressure refrigerant.

Accordingly, there Is a need for a heat pump module that strategically defines flow passages for flow of high pressure refrigerant and low pressure fluid. Further, there is a need for a heat pump module that configures refrigerant flow through the refrigerant valves and heat exchangers and that can withstand high-pressure refrigerant and hence is reliable. Furthermore, there is a need for a heat pump module that involves comparatively less pressure drop of fluid flowing there through and is more efficient compared to conventional heat pump modules. Further, there is a need for a heat pump module that is compact compared to the conventional heat pump modules.

### SUMMARY

A heat pump module for a vehicle is disclosed in accordance with an embodiment of the present invention. The heat pump module is adapted to be in fluidic communication with the heat exchangers of a heating ventilating and air conditioning system and /or an external heat exchanger. The heat pump module is having a refrigerant circuit arranged in a combination of blocks, connectors and jumper pipes and at least a plate assembly containing at least one channel in order to distribute the refrigerant to different components of the heat pump module. The components comprising at least one of an accumulator, a chiller, an internal heat exchanger, a compressor, and at least one valve. The plate assembly containing at least one channel for the circulation of the refrigerant.

The combination of different means to realize the refrigerant circuits allow to have a low volume, a low weight, a low complexity and a good efficiency of the heat pump module.

Preferably, the plate assembly comprises a stack of plates defining conjointly at least one circulation channel, for example two circulation channels.

Some components like the internal heat exchanger and the accumulator can be mounted on the plate assembly.

Preferably, the plate assembly comprises a channel plate comprising at least one cavity corresponding to the shape of the at least one channel of the plate assembly, and a flat back plate closing the at least one cavity of the channel plate to form the channels of the plate assembly. This arrangement can be robust and have a low weight. The channel plate can be casted or forged.

Preferably, the plate assembly is extending, regarding the longitudinal direction (L) of the module, from one longitudinal extremity of the module to the opposite longitudinal extremity of the module.

Preferably, at least one channel of the plate assembly comprises at least a bent portion or a turn. Preferably, at least one channel of the plate assembly, in an interface plan of the plate assembly, has a C shape. In particular, the plate assembly has a C shape. The plate assembly is easier to implement than jumper pipes for complex geometrical channels, even for a long channel, for example from one longitudinal extremity of the module to the opposite longitudinal extremity of the module. It is also a good compromise in terms of weight and robustness.

Preferably, the heat pump module being configured so that at least one of the jumper pipes, for example all the jumper pipes and at least one of the blocks, for example all blocks, are associated to higher pressure portions of the refrigerant circuit than the plate assembly.

Preferably, the internal heat exchanger has a low pressure refrigerant flow line, a low pressure inlet port, a low pressure outlet port, a high pressure refrigerant flow line, a high pressure inlet port, a high pressure outlet port. The low pressure refrigerant flow line crosses the internal heat exchanger between the low pressure inlet port and the low pressure outlet port. The high pressure refrigerant flow line crosses the internal heat exchanger between the high pressure inlet port and the high pressure outlet port. The plate assembly is arranged directly upstream the low pressure inlet port of the internal heat exchanger.

Generally, the internal heat exchanger has a low pressure refrigerant flow line, a low pressure inlet port, a low pressure outlet port, a high pressure refrigerant flow line, a high pressure inlet port, a high pressure outlet port. The low-pressure refrigerant flow line crosses the internal heat exchanger between the low-pressure inlet port and the low pressure outlet port. The high-pressure refrigerant flow line crossing the internal heat exchanger between the high-pressure inlet port and the high-pressure outlet port. The plate assembly is arranged directly upstream the low-pressure inlet port of the internal heat exchanger.

Particularly, the at one valve or the valves are any one of expansion valves, check valves, solenoid valves and solenoid valves and at least one of the valves and at least one sensor are mounted on the block, in particular, with metal gasket and/or O-ring disposed between the block and at least one of the valves and sensor.

Particularly a first block configures fluid flow passages for fluid communication between an upstream side of the external heat exchanger, in particular the evaporator gas cooler, and the compressor in a cooling mode, and/ or between an upstream side of a inner gas cooler of the heating ventilating and air conditioning system and the compressor in a heating mode.

Particularly, the heat pump module comprises a first block and a second block.

Particularly, the first block and the second block configure fluid flow passages downstream the compressor in particular for relatively high temperature and high pressure fluid.

Particularly, the first block configures fluid flow passages downstream the compressor in particular for high temperature and high pressure fluid, the first block having an output destined to send relatively hot fluid to one of the heat exchangers of the heating ventilating and air conditioning system in a heating mode, in particular a inner gas cooler.

Particularly, the second block having an output destined to send relatively cold fluid to one of the heat exchangers of the heating ventilating and air conditioning system in a cooling mode, in particular an evaporator.

Particularly, the first block is incorporated with at least two expansion valves (a third expansion valve and a sixth expansion valve), and a solenoid valve.

Further, the second block configures fluid flow passages for fluid communication between an downstream side of the evaporator gas cooler in a cooling mode of the heating ventilating and air conditioning system and at least one of internal heat exchanger, evaporator, an internal gas cooler and a chiller.

Generally, the second block is incorporated with a second check valve and/or a plurality of expansion valves, for example four expansion valves, in particular a second expansion valve in particular adapted to receive the fluid coming from the external heat exchanger, a fifth expansion valve in particular adapted to transmit the fluid to the evaporator of the heating, ventilating and air conditioning system, a first expansion valve and a fourth expansion valve in the path of the fluid toward the chiller .

The first expansion valve is located in the path of the second block between the fourth expansion valve and the fifth expansion valve, or in the path of the second block linking the internal heat exchanger and the fourth expansion valve.

Further, the heat pump module comprises a third block.

The plate assembly and a third block are configured, in particular during a heating mode of the chiller, to transmit conjointly the fluid coming from the external heat exchanger, in particular the chiller water gas cooler to the accumulator and/or the internal heat exchanger.

Generally, the third block is adapted to receive first fluid stream from the chiller and second fluid stream from the external heat exchanger, in particular the evaporator gas cooler, and direct a combined fluid stream to the accumulator.

Further, the third block is incorporated with seventh expansion valve and the second shut off valve.

Specifically, the plate assembly configures fluid communication between the internal heat exchanger and the accumulator and/or between the accumulator and an inlet port of the module destined to be connected to the outlet of one of the heat exchangers of the heating ventilating and air conditioning system, in particular an evaporator of the heating ventilating and air conditioning system.

Particularly, the plate assembly comprises a first channel and a second channel. An inlet of the accumulator being connected to the first channel, in particular to its output connector and the outlet of the accumulator being connected to the second channel, in particular to its input connector.

More specifically, the first channel is arranged fluidly between the accumulator and an inlet port of the module destined to be connected to the outlet of one of the heat exchangers of the heating ventilating and air conditioning system, in particular the evaporator of the heating ventilating and air conditioning system, and the second channel is arranged fluidly between the accumulator and the low pressure inlet port of the internal heat exchanger.

Preferably, the plate assembly is configured so that the first check valve is introduced at least partly in the plate assembly.

Particularly, the jumper pipes are adapted to withstand pressures exerted by fluid flowing there through greater than 270 bars.

Specifically, the connectors configure fluid communication between the blocks and at least one of the plate assembly and the jumper pipes misaligned with respect to the channels of the blocks.

Further, the heat pump module comprises a frame configured to be mounted on a vehicle frame and the components are mounted in specific mounting spaces defined within the frame. This frame can be realized in plastic, for example with injection moulding.

The plate assembly can be mounted on the frame.

Particularly, the jumper pipes of the heat pump modules are arranged in a plurality of jumper pipes devices, all the jumper pipe devices being arranged globally in a space parallel to the plane of plate assembly, the space preferably extending in both sides of the plate assembly.

Particularly, the heat pump module comprises a first group of components, including for example the compressor and the accumulator, located in a first side of the heat pump module and a second group of components, including for example the chiller and the internal heat exchanger, located in a second side of the heat pump module, the first side and the second sides extending in particular parallel to the longitudinal direction of the heat pump module, an interval separating the first group of components and the second group of components, the plate assembly and at least one jumper pipe, being located in this interval, preferably all the jumper pipes devices being located partly or in totality, in the interval. Thus, all the jumper pipes are located hidden and protected inside the module.

Preferably, the second side is opposite to the first side.

Preferably, the first block is located in the first side of the heat pump module.

Preferably, the second block is located in the second side of the heat pump module.

Preferably, the third block is located in the second side of the heat pump module.

The second block and the third block are arranged in a L shape arrangement, preferably in the second side of the heat pump module.

In an other embodiment, the third block channels could be integrated into the second block.

### BRIEF DESCRIPTION

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1 illustrates an isometric view of a thermal management module, particularly, a heat pump in accordance with an embodiment of the present invention.
FIG. 2 illustrates a block diagram depicting a refrigerant circuit arranged in a combination of blocks, connectors and jumper pipes.
FIG. 3 illustrates a block diagram depicting a plate assembly configuring a low-pressure portion of the refrigerant circuit of the heat pump module.
FIG. 4a illustrates a front isometric view of a first block of the heat pump module of FIG. 1.
FIG. 4b illustrates a rear isometric view of the first block of FIG. 4a.
FIG. 4c and FIG. 4d illustrate different sectional views of the first block of FIG 4a depicting internal passages.
FIG. 5a illustrates a front isometric view of a second block of the heat pump module of FIG. 1.
FIG. 5b illustrates a rear isometric view of the second block of FIG. 5a.
FIG. 5c illustrates sectional view of the second block of FIG. 5a depicting internal passages.
FIG. 6a illustrates a front isometric view of a third block of the heat pump module of FIG. 1.
FIG. 6b illustrates another isometric view of the third block of FIG. 5a.
FIG. 6c illustrates sectional view of the third block of FIG. 6a depicting internal passages.
FIG. 7a illustrates a front isometric view of a plate assembly for the heat pump module of FIG. 1.
FIG. 7b illustrates a rear isometric view of the plate assembly of FIG. 7a.
FIG. 8a- 8f illustrates network of jumper pipes configuring fluid communication between various components of the heat pump.
FIG. 9 illustrates an arrangement of first block with respect to the compressor.

### DETAILED DESCRIPTION

It must be noted that the accompanying figures disclose the invention in a detailed enough way to be implemented, said figures helping to better define the invention if needs be. The invention should however not be limited to the embodiment disclosed in the description.

The present disclosure envisages a heat pump module for a vehicle, particularly, for cabin cooling and heating with battery cooling function for electric vehicle. The heat pump module is adapted to be in fluidic communication with the heat exchangers of a heating ventilating and air conditioning system. Specifically, the heat pump module is having a refrigerant circuit arranged in a combination of blocks, connectors, and jumper pipes in order to distribute the refrigerant into different components of the heat pump module. The blocks are strategically disposed in the heat pump module to define flow passages for high-pressure refrigerant of the refrigerant circuit. Further, the jumper pipes are associated to higher-pressure portions of the refrigerant circuit than at least one plate assembly. The plate assembly is associated to the lowest pressure portion of the refrigerant circuit. Although, the present invention is explained with example of heat pump module for use in vehicular environment. However, the present invention is also applicable to any fluid management system used in vehicular and non-vehicular environments, wherein it is required to configure a complex fluid flow circuit by using combination of blocks, valves and jumper pipes for defining fluid flow through different components based on pressure of the fluid. More specifically, the present invention is applicable to any other system involving complex fluid-flow circuits, wherein the fluid flow circuit involves high-pressure portions and low-pressure portions and it is required to effectively handle high-pressure fluid and low-pressure fluid to render the system compact and efficient and to enable the system to address pressure drop issues.

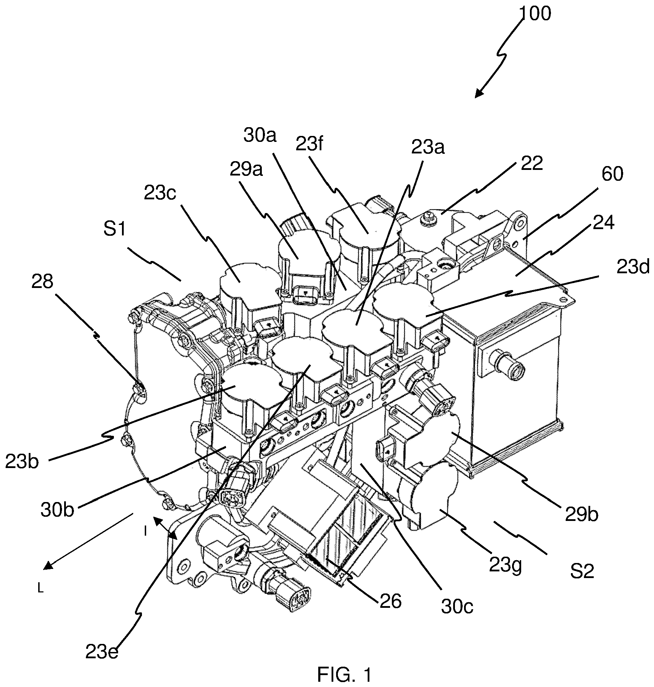

A heat pump module 100 for a vehicle is disclosed in accordance with an embodiment of the present invention. FIG. 1 illustrates an isometric view of the heat pump module 100. The heat pump module 100 of the present invention integrates both the coolant loop and the refrigerant loop. More specifically, the heat pump module 100 for cabin cooling and heating also performs battery cooling function for electric vehicles. The heat pump module 100 is adapted to be in fluidic communication with heat exchangers of a heating ventilating and air conditioning system.

Generally, R-744 is preferred refrigerant over fluorinated refrigerant such as R-134a or R-1234yf, anticipating ban on the fluorinated refrigerant. The R-744 based air conditioning systems offers more power and efficiency at extreme cold temperatures (-18°C) due to enhanced thermodynamic properties of the R-744 refrigerant. The heat pump module 100 of the present invention is adapted to handle high-pressure refrigerants such as R-744 and configures refrigerant flow through the valves and heat exchangers. However, the heat pump module 100 for the R-744 based air conditioning systems face several challenges. More specifically, the heat pump module should be capable of withstanding the high-pressure refrigerant such as R744. Accordingly, the fluid flow circuit defined by the heat pump module involves separate high-pressure portions and low-pressure portions.

To address the challenges of handling high-pressure refrigerant, the heat pump module 100 is having a refrigerant circuit arranged in a combination of blocks 30, connectors 40 and jumper pipes 50 in order to distribute the refrigerant into different components 20. The blocks 30 are formed with flow passages bored therein. Such blocks 30 with flow passages bored therein are capable of withstanding the high-pressure of high-pressure refrigerant and are strategically disposed in the high-pressure portions of the refrigerant circuit. The heat pump module 100 further comprises a plate assembly 60 that is associated to the lowest pressure portion of the refrigerant circuit of the heat pump module 100, thereby providing different structures for handling low-pressure fluid and avoiding use of blocks for handling low-pressure fluid. Such combination of blocks and plate assembly renders the heat pump module 100 compact and avoids pressure drop issues. More specifically, the refrigerant circuit of the heat pump module 100 involves elements of different structural configurations that define high-pressure portions and low-pressure portions of the fluid flow circuit. For example, the heat pump module 100 of the present invention involves blocks 30 configured with fluid flow passages formed by boring the block to withstand high pressures of the refrigerant at the high-pressure portions of the refrigerant circuit.

The blocks 30 are strategically disposed within the heat pump module 100 to define flow passages for high-pressure refrigerant of the refrigerant circuit. Particularly, there are multiple blocks 30 formed with fluid flow passages and valves 23, 25, 27, 29, at least one sensorand connectors 40 mounted thereon. The blocks 30 not only configure fluid flow passages for high-pressure refrigerant but also act as mounting point for mounting the sensors and connectors 40. With such configuration of the sensors mounted on the blocks 30, the sensors can efficiently detect parameters of the fluid flowing through the fluid flow passages formed on blocks 30. The valves 23, 25, 27, 29 define the fluid flow passages within the blocks 30 and the connectors 40 define fluid communication between the blocks 30 and at least one of the plate assembly 60 and the jumper pipes 50 misaligned with respect to the blocks 30. The mounting of the sensors on the blocks 30 prevents the need of dedicated mounting arrangement for the sensors, thereby rendering the heat pump module 100 compact.

The different components 20 include but are not limited to, accumulator 22, a chiller 24, an internal heat exchanger 26, a compressor 28, at least one valve 23, 25, 27, 29, at least one sensor and at least one charging port 21b of the heat pump module 100. Generally, all the components 20 are mounted on a frame 70 that in turn is mounted on a vehicle frame 202. In accordance with an embodiment, the plate assembly 60 acts a structural support for few of the components 20. Specifically, the valves 23, 25, 27, 29 of the heat pump module 100 are disposed between the chiller 24 and the compressor 28.

The valves 23 are any one of expansion valves 23a, 23b, 23c, 23d, 23e, 23f. 23g, check valves 25a, 25b, 25c, solenoid valves 27 and solenoid valves 29a, 29b. The blocks 30 are provided with provisions to prevent leak of high-pressure fluid at the connection between the blocks 30 and valves 23, 25, 27, 29. Particularly, metal gasket 72, 82 and/or O-ring 74, 84 are disposed between the at least one of the blocks 30 and at least one of the valves 23, 25.27, 29 and sensors.

Generally, a first block 30a and a second block 30b configures fluid flow passages between the compressor 28 and the evaporator 106. In particular, the first block 30a and the second block 30b configures fluid flow passages between downstream of the compressor 28 and upstream of the evaporator 108. More specifically, the first block 30a and the second block 30b handles high temperature and high-pressure fluid.

The first block 30a configures fluid flow passages 32a for fluid communication between an upstream side 104b of an external heat exchanger destined to be fluidly connected to the heat pump module, and the compressor 28. This external heat exchanger can be an evaporator gas cooler 104 or a chiller water gas cooler 104. This external heat exchanger can be located at the front end of the vehicle.

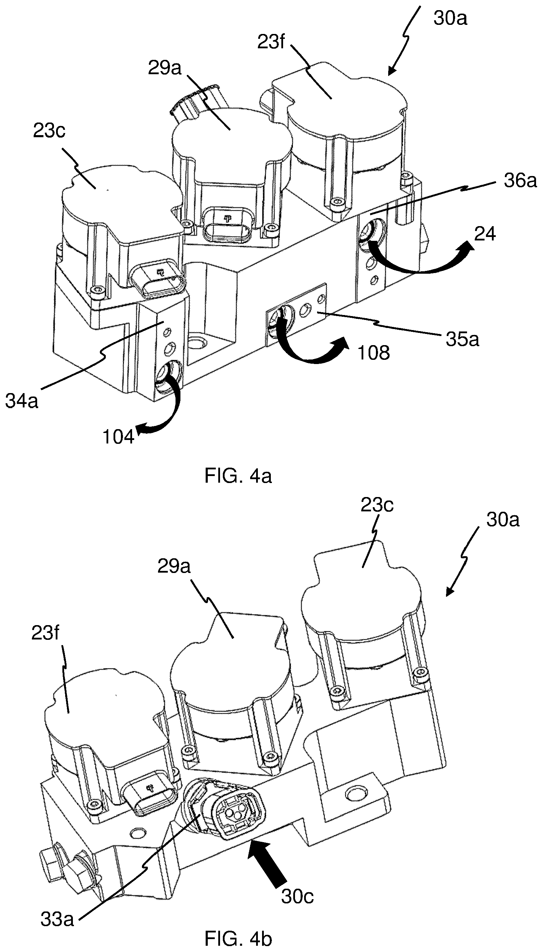

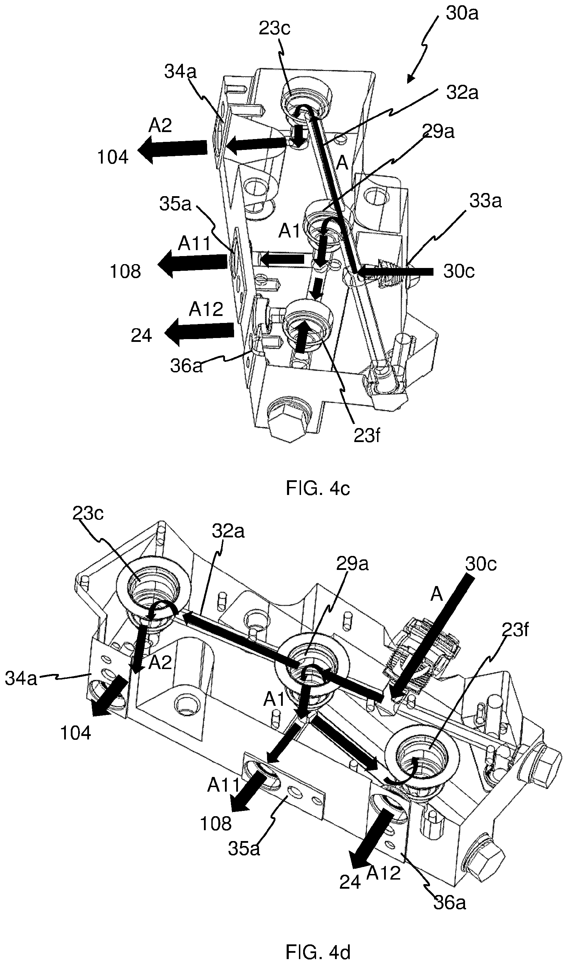

The first block 30a is incorporated with a third expansion valve 23c, a first solenoid valve 29a and a sixth expansion valve 23f as illustrated in FIG. 4a and FIG. 4b. Specifically, the third expansion valve 23c, the first solenoid valve 29a and the sixth expansion valve 23f are mounted on the first block 30a by means of bolts. The first block 30a is formed with fluid flow passages 32a to configure fluid communication between the third expansion valve 23c, the first shut-off valve 29a and the sixth expansion valve 23f. The fluid flow passages 32a are formed within the first block 30a by boring. The first solenoid valve 29a is disposed between the third expansion valve 23c and the sixth expansion valve 23f. The third expansion valve 23c, the first solenoid valve 29a and the sixth expansion valve 23f are selectively in fluid communication with each other based on the operating configuration of the valves 23c, 29a and 23f. For example, all fluid entering the first block 30a is directed to the third expansion valve 23c in case the first solenoid valve 29a is in closed configuration. The present invention is not limited to any particular configuration, number, placement and orientation of the first fluid flow passages 32a as far as the fluid flow passages 32a configure fluid communication between the third expansion valve 23c, the first solenoid valve 29a and the sixth expansion valve 23f based on the operating configuration of the valves 23c, 29a and 23f. The first block 30a receives fluid, particularly refrigerant from a third block 30c and selectively distributes the refrigerant received thereby to at least one of the evaporator gas cooler 104, the internal gas cooler 108, the chiller 24 based on operating configuration of the third expansion valve 23c, the first solenoid valve 29a and the sixth expansion valve 23f. Specifically, the first block 30a includes an inlet port 33a formed on a first face thereof and outlet ports 34a, 35a and 36a formed on opposite face of the first block 30a. More specifically, the outlet ports 34a and 35a are disposed on one side of the inlet port 33a but on opposite face, whereas the outlet port 36a is disposed on other side of the inlet port 33a but on opposite face. The refrigerant enters the fluid flow passages 32a through the inlet port 33a and is distributed to the evaporator gas cooler 104, the internal gas cooler 108 and the chiller 24 through the respective outlet ports 34a, 35a and 36a as illustrated in FIG. 4c and FIG. 4d.

The expansion valve 23c or third expansion valve is arranged in the first block in path of the fluid going to the external heat exchanger 104.

The expansion valve 23f or sixth expansion valve is arranged in the first block in path of the fluid going to the chiller 24.

The solenoid valve 29a or first solenoid valve 29a is arranged fluidly between the expansion valves 23c and 23f.

Referring to the FIG. 4c and Fig. 4d, the refrigerant stream A entering the first block 30a from the third block 30c is directed to the first solenoid valve 29a and subsequently to the third expansion valve 23c as streams A1 and A2 respectively. The refrigerant stream A2 is directed to the evaporator gas cooler 104 through the outlet port 34a by the third expansion valve 23c. A portion A11 of the refrigerant stream A1 is directed to the internal gas cooler 108 through the outlet port 35a by the first solenoid valve 29a, whereas a remaining portion A12 of the refrigerant stream A1 is directed to the chiller 24 through the outlet port 36a. The fluid flow passage connecting downstream of the first solenoid valve 29a to the upstream of the sixth expansion valve 23f is inclined towards the sixth expansion valve 23f for flow from the refrigerant from the first solenoid valve 29a towards the sixth expansion valve 23f.

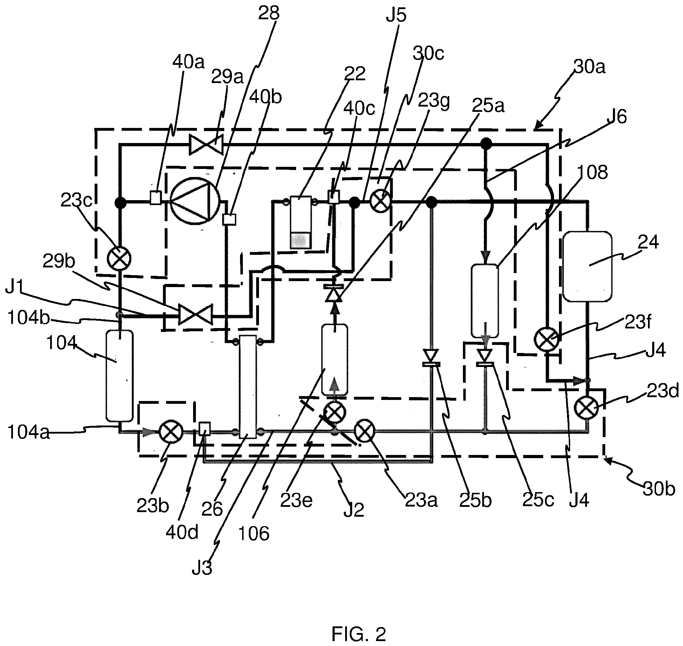

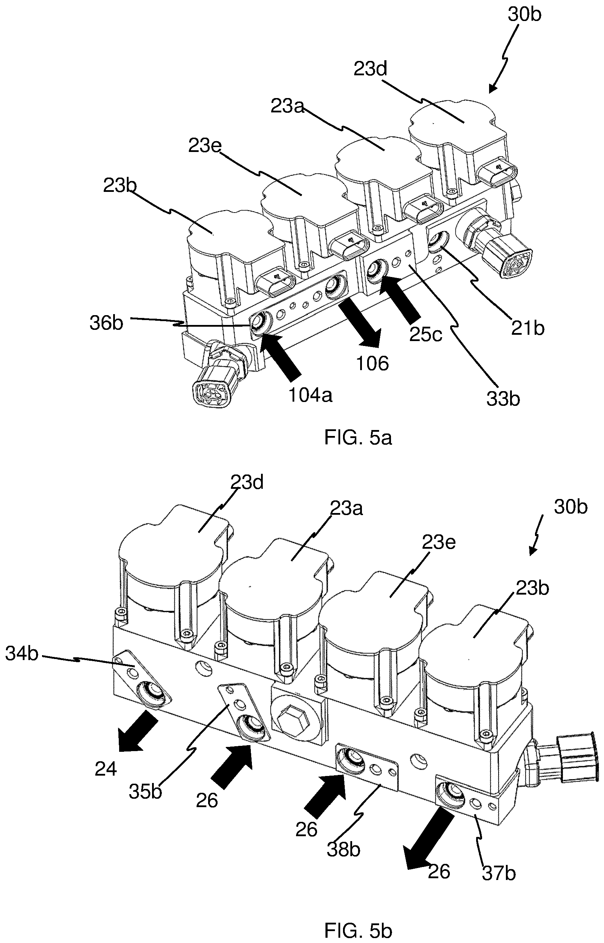

Referring to the FIG. 2, the second block 30b configures fluid communication between a downstream side 104a of the evaporator gas cooler 104 and at least one of the internal heat exchanger 26, the evaporator 106, the internal gas cooler 108 and the chiller 24. Accordingly, the second block 30b also handles high temperature and high-pressure fluid. Referring to the FIG. 5a and FIG. 5b, the second block 30b is incorporated with a second check valve 25b and a second expansion valve 23b, a fifth expansion valve 23e, a first expansion valve 23a and a fourth expansion valve 23d. More specifically, the second check valve 25b, the second expansion valve 23b, the fifth expansion valve 23e, the first expansion valve 23a and the fourth expansion valve 23d are mounted on the second block 30b by means of bolts. The second block 30b is formed with fluid flow passages 32b to configure fluid communication between a third check valve 25c, the first expansion valve 23a and the second expansion valve 23b. The second check valve 25c is integrally formed with and configured within the second block 30b. The fluid flow passages 32b are formed within the second block 30b by boring. The third check valve 25c, the first expansion valve 23a and the second expansion valve 23b are selectively in fluid communication with each other based on operating configuration of the valves 25c, 23a and 23b. The present invention is not limited to any particular configuration, number, placement and orientation of the second fluid flow passages 32b as far as the second fluid flow passages 32b configure fluid communication between the third check valve 25c, the first expansion valve 23a and the second expansion valve 23b based on the operating configuration of the valves 25c, 23a and 23b. The third check valve 25c is configured in the middle of the second block 30b, the first expansion valve 23a and the second expansion valve 23b are disposed on one side of the third check valve 25c whereas the 23e and 23b are disposed on other side of the third check valve 25c.

The internal heat exchanger 26 has a low pressure refrigerant flow line, a low pressure inlet port 261, a low pressure outlet port, a high pressure refrigerant flow line, a high pressure inlet port, a high pressure outlet port. The low pressure refrigerant flow line crossing the internal heat exchanger 26 between the low pressure inlet port and the low pressure outlet port. The high pressure refrigerant flow line crossing the internal heat exchanger 26 between the high pressure inlet port and the high pressure outlet port. The plate assembly 60 is arranged directly upstream the low pressure inlet port 261 of the internal heat exchanger 26. More specifically, there are no thermal components between the plate assembly 60 and the low pressure inlet port (like heat exchangers). In other words, it means that there is only circulation means, for example eventually with a conduct or a connector, of the fluid between the plate assembly 60 and the low pressure inlet port 261 of the internal heat exchanger 26.

The second block 30b is incorporated with a second check valve 25b and/or a plurality of expansion valves, for example four expansion valves, in particular a second expansion valve 23b, in particular adapted to receive the fluid coming from the external heat exchanger, a fifth expansion valve 23e in particular adapted to transmit the fluid to the evaporator 106 of the heating, ventilating and air conditioning system, a first expansion valve (23a) and a fourth expansion valve 23d.

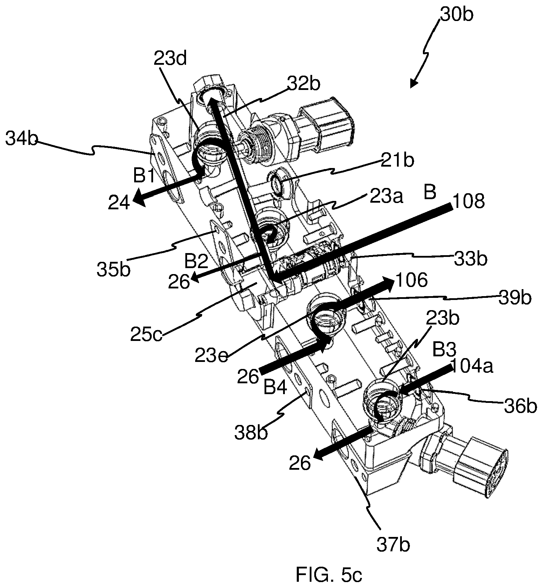

The second block 30b receives fluid, particularly, refrigerant from the internal gas cooler 108 through the third check valve 25c integrally formed within the second block 30b and selectively distributes the refrigerant received thereby to at least one of the evaporator gas cooler 26 and the chiller 24 based on operating configuration of the first expansion valve 23a and the fourth expansion 23d respectively. Specifically, the second block 30b includes an inlet port 33b formed on a first face thereof and outlet ports 34b and 35b formed on opposite face of the second block 30b. More specifically, the outlet ports 34b and 35b are disposed on same side of the inlet port 33b but on opposite face. The refrigerant enters the fluid flow passages 32b through the inlet port 33b and is distributed to the internal heat exchanger 26 and the chiller 24 through the respective outlet ports 34b and 35b as illustrated in FIG. 5c. Referring to the FIG. 5c, the refrigerant stream 8 entering the second block 30b from the internal gas cooler 108 and through the third check valve 25c is directed to the first expansion valve 23a and subsequently to the fourth expansion valve 23d as streams B1 and B2 respectively. The refrigerant stream B2 is directed to the internal heat exchanger 26 through the outlet port 35b by the first expansion valve 23a. The refrigerant stream B1 is directed to the chiller 24 through the outlet port 34b by the fourth expansion valve 23d.

The second block 30b further includes another input port 36b and another outlet port 37b on opposite faces of the second block 30b. More specifically, the input ports 36b and 33b are on the same face of the second block 30a, whereas the outlet ports 34b, 35b and 37b are on the same face of the second block 30b. The second block 30b receives a stream of refrigerant B3 from the evaporator gas cooler 104 through the inlet port 36b and the second expansion valve 23b directs the refrigerant stream B3 to the internal heat exchanger 26 through the outlet port 37b.

The second block 30b still further includes still another input port 38b and another outlet port 39b on opposite faces of the second block 30b. More specifically, the input port 38b is on the same face of the second block 30b on which the outlet ports 34ba and 37b are formed and is disposed between the outlet ports 34ba and 37b, whereas the outlet port 39b is on the same face of the second block 30b on which the inlet port 33b is formed. The second block 30b receives a stream of refrigerant B4 from the internal heat exchanger 26 through the inlet port 38b and the fifth expansion valve 23e directs the refrigerant stream B4 to the evaporator 106 through the outlet port 39b.

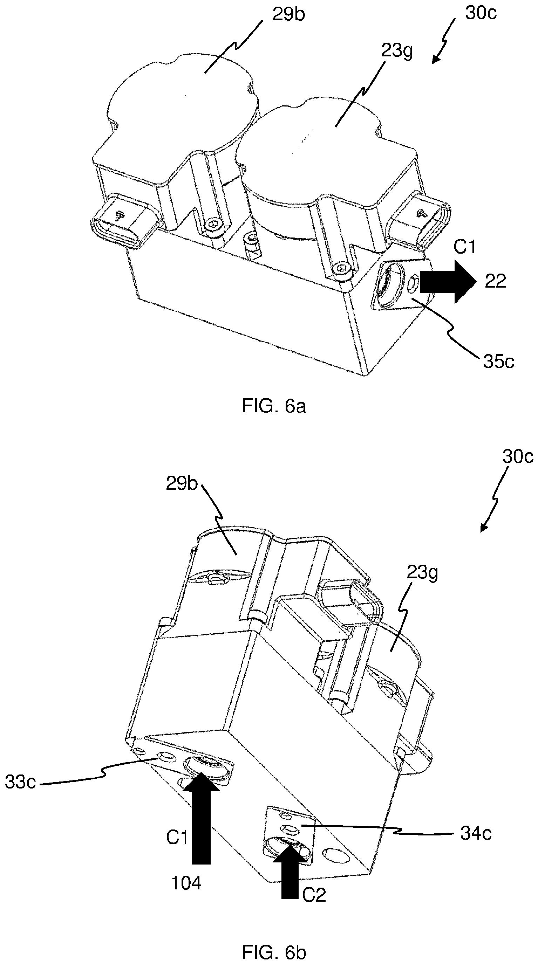

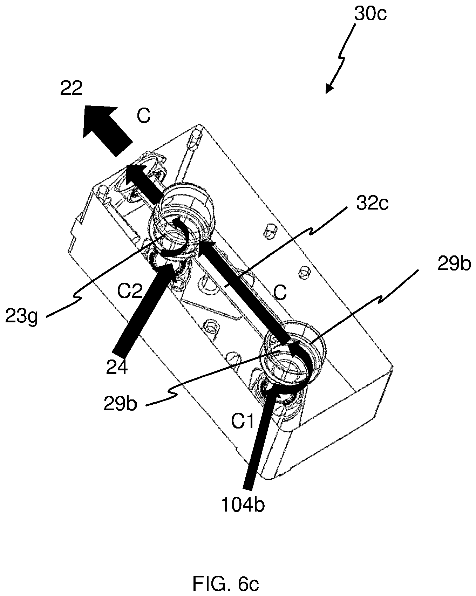

The heat pump module 100 further includes a third block 30c and the plate assembly 60. The plate assembly 60 and the third block 30c configures fluid flow passages downstream chiller 24. Accordingly, the third block 30c and the plate assembly 60 handles low-pressure fluid. Referring to the FIG. 2, the third block 30c configures fluid communication between the downstream side of the chiller 24 and the upstream side of the evaporator gas cooler 104. The third block 30c is adapted to receive first fluid stream from the chiller 24 and second fluid stream from the evaporator gas cooler 104 and direct a combined fluid stream to the accumulator 22. Referring to the FIG. 6a and FIG. 6b, the third block 30c is incorporated with the seventh expansion valve 23g and the second shut off valve 29b. More specifically, the seventh expansion valve 23g and the second shut off valve 29b are mounted on the third block 30c by means of bolts. Referring to the FIG. 6c, the second block 30b configures fluid flow passages 32b for fluid communication between the seventh expansion valve 23g and the second shut off valve 29b based on the operating configuration of the seventh expansion valve 23g and the second shut off valve 29b. The present invention is not limited to any particular configuration, number, placement and orientation of the third fluid flow passages 32c as far as the third fluid flow passages 32c configure fluid communication between the seventh expansion valve 23g and the second shut off valve 29b.

The plate assembly 60 and a third block 30c are configured , during a heating mode of the module, to transmit conjointly the low pressure fluid coming from the external heat exchanger, in particular the chiller water gas cooler 104 to the accumulator and/or the internal heat exchanger 26.

Referring to the FIG. 6c, the third block 30c receives a first fluid stream C1 from the evaporator gas cooler 104 and a second fluid stream C2 from the chiller 24 and directs a combined fluid stream C to the accumulator 22. The third block 30c is orthogonally disposed with respect to the second block 30b. Particularly, the third block 30c and the second block 30b are arranged in a L shaped configuration. The combined fluid stream C is formed by mixing of the first fluid stream C1 and the second fluid stream C2. More specifically, the third block 30c is configured with a pair of input ports 33c and 34c and an output port 35c. The pair of inlet ports 33c and 34c are configured on a bottom face of the third block 30c, whereas the outlet port 35c is configured on a face orthogonal to the bottom face of the third block 30c. The first fluid stream C1 from upstream of the evaporator gas cooler 104 enters the third block 30c from the port 33c and is directed by the second shut off valve 29b to the seventh expansion valve 23g. The seventh expansion valve 23g receives the first fluid stream C1 from the second shut off valve 29b and second fluid stream C2 from the chiller 24 and directs the combined fluid stream C to the accumulator 22.

Again referring to the FIG. 2, the plate assembly 60 configures fluid flow passages 60a for fluid communication between the accumulator 22 and at least one of the evaporator 106 and the internal heat exchanger 26. More specifically, the plate assembly 60 configures fluid communication between the internal heat exchanger 26, the accumulator 22 and the evaporator 106. The plate assembly 60 is configured with the first check valve 25a.

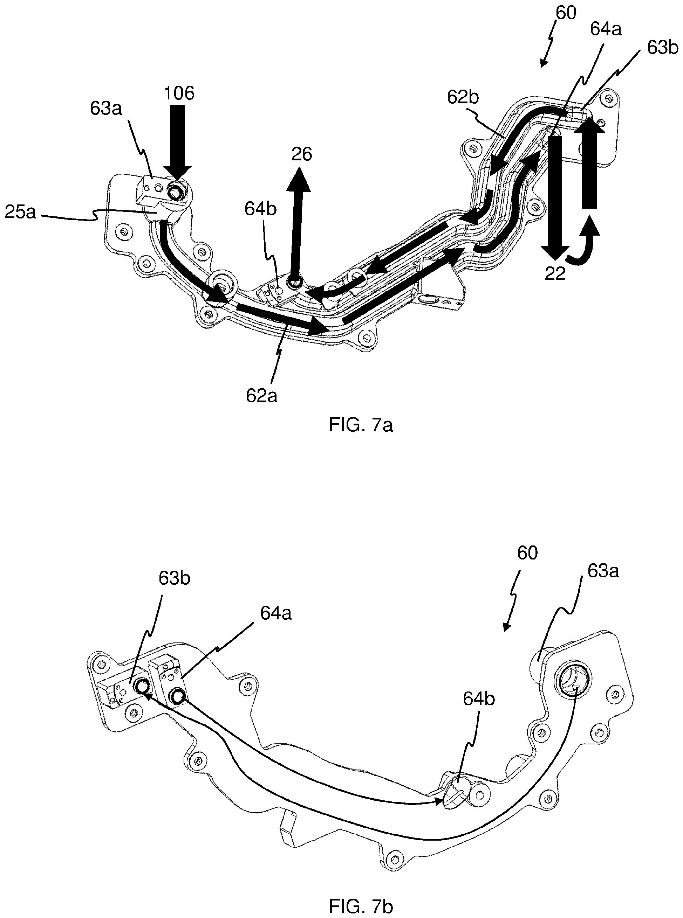

FIG. 7a and FIG. 7b illustrate respective front and rear isometric views of the plate assembly 60. The plate assembly 60 configures fluid communication between the internal heat exchanger 26 and the accumulator 22 and/or between the accumulator 22 and an inlet port of the module destined to be connected to the outlet of one of the heat exchangers of the heating ventilating and air conditioning system, in particular an evaporator 106 of the heating ventilating and air conditioning system. The plate assembly 60 comprises at least one channel 62.

The plate assembly comprises a stack of plates defining conjointly the at least one circulation channel. The plate assembly of Fig 7a has for example two circulation channels.

Some components like the internal heat exchanger and the accumulator can be mounted on the plate assembly.

Preferably, the plate assembly 60 comprises a channel plate comprising at least one cavity corresponding to the shape of the at least one channel of the plate assembly, and a flat back plate closing the at least one cavity of the channel plate to form the channels of the plate assembly.

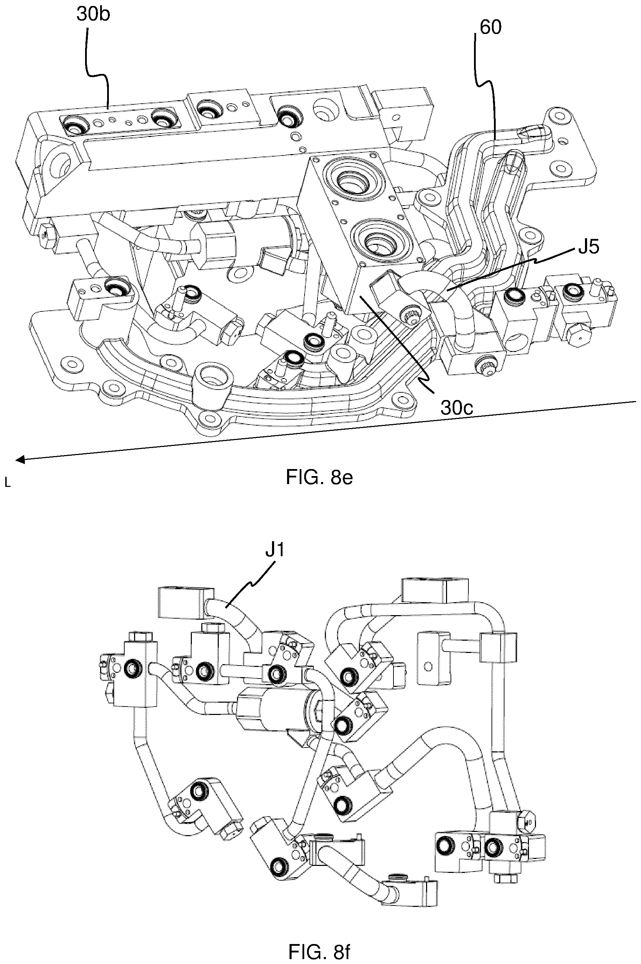

In fig 8e, we can see that the plate assembly is extending, regarding the longitudinal direction (L) of the module, from one longitudinal extremity of the module to the opposite longitudinal extremity of the module.

At least one channel of the plate assembly comprises at least a bent portion or a turn. Here one channel of the plate assembly, in an interface plan of the plate assembly, has a C shape. In particular, the plate assembly has a C shape. This plate assembly allows to obtain a channel with a complex geometry.

Globally, the plate assembly is located in a plane between the first block 30a and the second block 30b. The plate assembly is located in a plane between the first block 30a and the third block 30c.

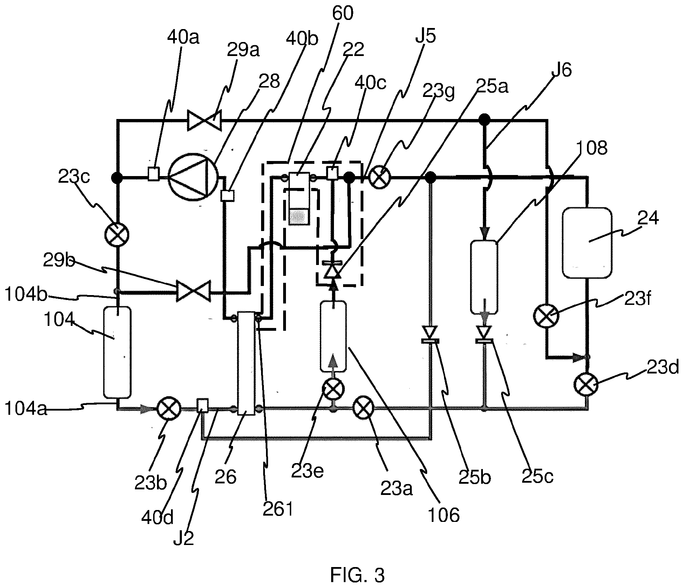

The channels 62 of the plate assembly 60 are extending along a plane located between the first block 30a and the third block 30c. The channels 62 of the plate assembly 60 are extending along a plane located between the first block 30a and the second block 30b. The heat pump module 100 being configured so that the jumper pipes 50 and at least one of the blocks 30 are associated to higher pressure portions of the refrigerant circuit than the plate assembly 60. More specifically, the plate assembly 60 handles low-pressure fluid. The plate assembly 60 comprises first channel 62a and a second channel 62b respectively. Referring to the FIG. 3 of the accompanying drawings, arrangement and fluid communication between the plate assembly 60 and other components such as the accumulator 22, the evaporator 106 and the internal heat exchanger 26 is depicted. The first channel 62a is disposed between the evaporator 106 and the accumulator 22 and the second channel 62b is disposed between the accumulator 22 and the internal heat exchanger 26. More specifically, the inlet 22a of the accumulator 22 is connected to the first channel 62a, in particular its output port 64a of the first channel 62a and the outlet 22b of the accumulator 22 is connected to the second channel 62b, in particular input port 63b of the second channel 62b.The first channel 62a is arranged fluidly between the accumulator 22 and an inlet port of the module destined to be connected to the outlet of one of the heat exchangers of the heating ventilating and air conditioning system, in particular an evaporator 106 of the heating ventilating and air conditioning system, and the second channel 62b is arranged fluidly between the accumulator 22 and the low pressure inlet port of the internal heat exchanger 26.

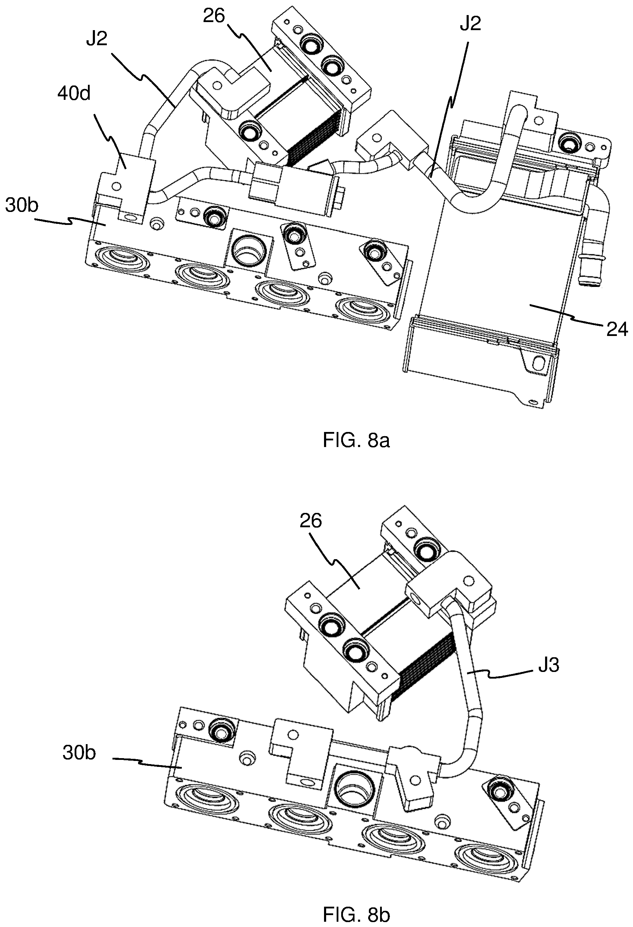

The heat pump system 100 further comprises jumper pipes 50 for configuring fluid communication between components 20. FIG. 8a- 8f illustrates network of jumper pipes configuring fluid communication between various components 20 of the heat pump 100 or between various blocks 30. The jumper pipes 50 are of comparatively high thickness and adapted to withstand high pressures exerted by high-pressure fluid flowing there through. There are six jumper pipes devices J1, J2, J3, J4, J5 and J6 configuring fluid communication between different components 20 and/or different blocks 30. The jumper pipes devices J1-J6 are arranged between external faces of first block 30a and the third block 30c.

The jumper pipes devices J1-J6 carry fluid, few of the jumper pipes are adapted to carry high-pressure fluid while other carry low-pressure fluid. More specifically, J5 carry low-pressure fluid, whereas J3, J4 and J6 carry high-pressure fluid. J1 and J3 are adapted to carry either high-pressure or low-pressure fluid.

The FIG. 8a - 8f, depict the network of the jumper pipes configuring fluid communication between different components 20 or blocks 30.

Referring to FIG. 2 and FIG. 8a, the second jumper pipe device J2 includes two sections. The first section of the second jumper pipes device j2 configures fluid communication between internal heat exchanger 26 and connector 40d. The second section of the jumper pipe device J2 configures fluid communication between the chiller 24 and the connector 40d. The jumper pipes device j2 allows either the cold fluid stream from the chiller 24 or the hot fluid from the internal heat exchanger 26 to flow there through based on the operating mode of the heat pump 100.

Referring to FIG. 2 and FIG. 8b, third jumper pipes device J3 configuring fluid communication between the internal heat exchanger 26 and the second block 30b is illustrated. More specifically, the third jumper pipe device j3 supplies hot fluid between the internal heat exchanger 26 and the second block 30b.

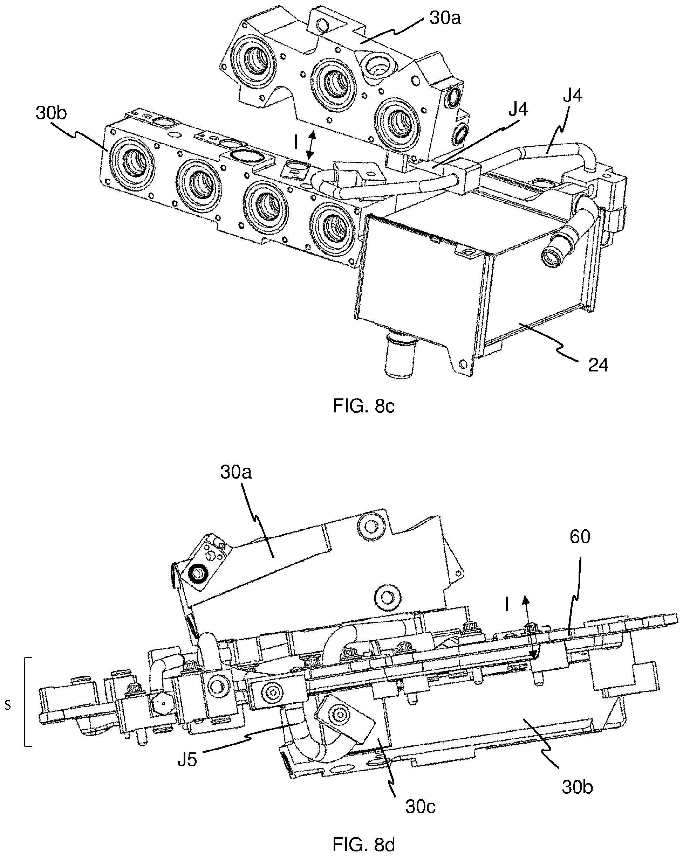

Referring to FIG. 2 and FIG. 8c, network of third jumper pipes J4 is illustrated. The jumper pipes J4 comprises two sections, wherein a first section of the fourth jumper pipes device j4 emanates from first block 30a and a second section of the fourth jumper pipes device j4 emanates from the second block 30b. The network of fourth jumper pipes J4 facilitates supply of the fluid either from the first block 30a or the second block 30b upstream of the chiller 24 to supply the fluid to the chiller 24 based on operating configuration of the heat pump 100.

Referring to FIG. 2, FIG. 8c and FIG. 8d, the jumper pipes device j5 configures fluid communication between the third block 30c and the plate assembly 60.

Referring to FIG. 2, the jumper pipes device j6 configures fluid communication between the first block 30a and the internal gas cooler 108.

Referring to FIG. 2 and FIG. 8f, the jumper pipes device j1 configures fluid communication between the third block 30c and the first block 30a.

The heat pump system 100 further comprises a frame 10 configured to be mounted on a vehicle frame 202 and the components 20 are mounted in specific mounting spaces defined within the frame 10.

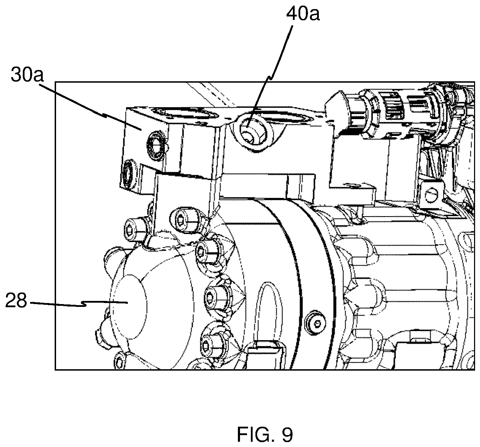

The heat pump system 100 further comprises the connectors 40. The connectors 40 define fluid communication between the blocks 30 and at least one of the plate assembly 60 and the jumper pipes 50 misaligned with respect to the blocks 30. More specifically, a first connector 40a is integrally formed within the first block 30a and configures fluid communication between the first block 30a and the compressor 28. FIG. 2 and FIG. 9 depict the first connector 40a being integrally formed within the first block 30a. The second connector 40b configures fluid communication between the compressor 28 and the internal heat exchanger 26. The third connector 40c configures fluid communication between the third block 30c and the accumulator 22. The fourth connector 40d configures fluid communication between the second block 30b and the internal heat exchanger 26. With such configuration of the connectors, the fluid connection can be established between the blocks 30 and at least one of the plate assembly 60 and the jumper pipes 50 misaligned with respect to the blocks 30.

Obviously, numerous modifications and variations of the present invention are possible in light of the above teachings. It is therefore to be understood that the invention may be practiced otherwise than as specifically described herein.

## Claims

1. A heat pump module (100) for a vehicle, the heat pump module (100) being adapted to be in fluidic communication with the heat exchangers (106, 108) of a heating ventilating and air conditioning system and/or an external heat exchanger (104), the heat pump module (100) having a refrigerant circuit arranged in a combination of blocks (30), connectors (40), jumper pipes (50) and at least a plate assembly (60) containing at least one channel, in order to distribute the refrigerant into different components (20) of the heat pump module (100), the components comprising at least one of an accumulator (22), a chiller (24), an internal heat exchanger (26), a compressor (28), at least one valve (23, 25, 29).

2. The heat pump module (100) as claimed in the previous claim, wherein the plate assembly (60) is extending, regarding the longitudinal direction (D) of the module, from one longitudinal extremity of the module to the opposite longitudinal extremity of the module.

3. The heat pump module (100) as claimed in any of the preceding claims, wherein at least one channel of the plate assembly comprises at least a bent portion or a turn.

4. The heat pump module (100) as claimed in any of the preceding claims, wherein at least one channel of the plate assembly, in an interface plan of the plate assembly, has a C shape.

5. The heat pump module (100) as claimed in any of the preceding claims, wherein the internal heat exchanger (26) has a low pressure refrigerant flow line, a low pressure inlet port (261), a low pressure outlet port, a high pressure refrigerant flow line, a high pressure inlet port, a high pressure outlet port, the low pressure refrigerant flow line crossing the internal heat exchanger between the low pressure inlet port and the low pressure outlet port, and the high pressure refrigerant flow line crossing the internal heat exchanger between the high pressure inlet port and the high pressure outlet port, the plate assembly (60) is arranged directly upstream the low pressure inlet port (261) of the internal heat exchanger (26).

6. The heat pump module (100) as claimed in any of the preceding claims, wherein the at least one valve (23) is any one of expansion valves (23a, 23b, 23c, 23d, 23e, 23f. 23g), check valves (25a, 25b, 25c), solenoid valves (27, 29a, 29b) and at least one of the valves (23, 25, 29) and at least a sensor are mounted on the block (30), in particular with metal gasket (72, 82) and/or O-ring (74, 84) disposed between the block (30) and at least one of the valves (23, 25, 29) and sensor.

7. The heat pump module (100) as claimed in any of the preceding claims, wherein a first block (30a) configures fluid flow passages (32a) for fluid communication between an upstream side (104b) of the external heat exchanger (104) and the compressor (28) in a cooling mode, and/ or between an upstream side of a inner gas cooler (108) of the heating ventilating and air conditioning system and the compressor (28) in a heating mode.

8. The heat pump module (100) as claimed in the preceding claims, wherein the first block (30a) and a second block (30b) configures fluid flow passages downstream the compressor (28) in particular for relatively high temperature and high pressure fluid, the first block (30a) having an output destined to send relatively hot fluid to one of the heat exchangers of the heating ventilating and air conditioning system in a heating mode, and the second block having an output destined to send relatively cold fluid to one of the heat exchangers of the heating ventilating and air conditioning system in a cooling mode.

9. The heat pump module (100) as claimed in one of the claim 7 to 8, wherein the first block (30a) is incorporated with at least two expansion valves (23c, 23f), and a solenoid valve (29a).

10. The heat pump module (100) as claimed in claim 8, wherein the second block (30b) configures fluid flow passages (32b) for fluid communication between a downstream side (104a) of the evaporator gas cooler (104) in a cooling mode of the heating ventilating and air conditioning system and at least one of internal heat exchanger (26), evaporator (106), an internal gas cooler (108) and a chiller (24).

11. The heat pump module (100) as claimed in claim 8 or 10, wherein the second block (30b) is incorporated with a second check valve (25b) and/or a plurality of expansion valves, for example four expansion valves, in particular a second expansion valve (23b) in particular adapted to receive the fluid coming from the external heat exchanger, a fifth expansion valve (23e) in particular adapted to transmit the fluid to the evaporator (106) of the heating, ventilating and air conditioning system, a first expansion valve (23a) and a fourth expansion valve (23d) in the path of the fluid toward the chiller (24).

12. The heat pump module (100) as claimed in one of the preceding claims, wherein the plate assembly (60) configures fluid communication between the internal heat exchanger (26)and the accumulator (22) and/or between the accumulator (22) and an inlet port of the module destined to be connected to the outlet of one of the heat exchangers of the heating ventilating and air conditioning system, in particular an evaporator (106) of the heating ventilating and air conditioning system

13. The heat pump module (100) as claimed in one of the preceding claims, wherein the plate assembly (60) comprises a first channel (62a) and a second channel (62b), , an inlet (22a) of the accumulator (22) being connected to the first channel (62a), in particular to its output connector (64a) and the outlet (22b) of the accumulator (22) being connected to the second channel (62b), in particular to its input connector (63b).

14. The heat pump module (100) as claimed in one of the preceding claims, wherein the jumper pipes of the heat pump modules are arranged in a plurality of jumper pipes devices (J1, J2, J3, J4, J5, J6), all the jumper pipe devices being arranged globally in a space (S) parallel to the plane of plate assembly (60), the space preferably extending in both sides of the plate assembly (60).

15. The heat pump module (100) as claimed in one of the preceding claims, , wherein the heat pump module comprises a first group of components, including for example the compressor and the accumulator, located on a first side (S1) of the heat pump module and a second group of components, including for example the chiller and the internal heat exchanger, located in a second side (S2) of the heat pump module, the first side (S1) and the second sides (S2) extending in particular parallel to the longitudinal direction of the heat pump module (L), an interval (I) separating the first group of components and the second group of components, the plate assembly and at least one jumper pipe, being located in this interval, preferably all the jumper pipes devices being located partly or in totality, in the interval (I).
